# EUROPÄISCHE PATENTSCHRIFT

(11) **EP 4 123 266 B1**
(45) Veröffentlichungstag und Bekanntmachung des Hinweises auf die Patenterteilung: **14.05.2025**
(21) Anmeldenummer: 21186379.0
(22) Anmeldetag: 19.07.2021
(51) Int. Cl.: G01F 1/66, G01F 15/14, G01F 15/18

(54) **ULTRASCHALLDURCHFLUSSMESSER**
ULTRASOUND FLOW MEASURING DEVICE
DÉBITMÈTRE ULTRASONORE

(43) Veröffentlichungstag der Anmeldung: 25.01.2023
(73) Patentinhaber: Kamstrup A/S, 8660 Skanderborg (DK)
(72) Erfinder: Holmegaard, Lotte, Hinnerup (DK); Schmidt Laursen, Peter, Skanderborg (DK)
(74) Vertreter: Patentanwälte Hemmer Lindfeld Frese Partnerschaft mbB

(56) Entgegenhaltungen:
- DE-A1- 102006 015 217
- DE-A1- 102006 015 218
- DE-A1- 2 526 817
- US-A1- 2017 314 978

## Beschreibung

Die Erfindung betrifft einen Ultraschalldurchflussmesser mit einem Gehäuse und einem gehäuseseitigen Kanal zum Durchleiten eines Fluids, dessen Durchfluss gemessen werden soll. Die Durchflussmessung erfolgt mittels Ultraschall, hierzu ist mindestens ein Ultraschallwandler an einer den Kanal begrenzenden Wandung innerhalb des Gehäuses angeordnet.

Derartige Ultraschalldurchflussmesser zählen zum Stand der Technik und werden typischerweise eingesetzt, um den Brauchwasserverbrauch von Wohneinheiten oder anderen Verbrauchern zu bestimmen aber auch als Teil von Wärmemengenmessern, bei denen der Wärmeverbrauch anhand der Durchflussmenge und der Temperaturdifferenz ermittelt wird.

Die Erfindung geht aus von einem Stand der Technik wie er aus EP 3 550 272 B1 bekannt ist. Dort ist ein Ultraschalldurchflussmesser mit einem Gehäuse beschrieben, welches einen das Gehäuse durchsetzenden Kanal aufweist, der zum Durchleiten einer Flüssigkeit vorgesehen ist. Die durch diesen Kanal fließende Durchflussmenge wird durch Ultraschallmessung bestimmt. Hierzu sind zwei Ultraschallwandler vorgesehen, von denen einer als Ultraschallsender und der andere als Ultraschallempfänger arbeitet und die an der den Kanal begrenzenden Wandung innerhalb des Gehäuses anliegen. Die Ultraschallwandler sind dabei jeweils auf Abschnitten einer gemeinsamen Platine angeordnet, die innerhalb des Gehäuses eingegliedert ist und welche die elektrischen und elektronischen Bauteile aufnimmt. Die Ultraschallwandler sind auf Platinenabschnitten angeordnet, die gegenüber der übrigen Platine begrenzt beweglich sind, sodass die Ultraschallwandler durch auf die Platine wirkende Schraubenfedern mit Federkraft beaufschlagt werden können. Die Federn sind jeweils durch ein rückseitiges Tragelement abgestürzt, welches zusammen mit der Platine mittels zwei Schrauben an vom Gehäuseboden aufragenden Zapfen befestigt sind, wobei die Schrauben in diese Zapfen eingreifen. Abgeschlossen wird das Gehäuse durch einen Deckel, der umfänglich mit dem Gehäuse verschweißt ist. Die DE 10 2006 015 217 A1, DE 25 26 817 A1 und DE 10 2006 015 218 A1 beschreiben jeweils Clamp-On-Ultraschalldurchflussmessgeräte. Die US 2017/0314978 A1 beschreibt einen Ultraschalldurchflussmesser mit einem Gehäuse, das auf ein Durchflussrohr aufgesteckt wird.

Für die Schallankopplung zwischen den Ultraschallwandlern und dem Kanal ist es ganz wesentlich, dass die Ultraschallwandler mit ausreichender Kraft an die Wandung angepresst werden, und zwar so, dass dies auch bei Temperaturschwankungen und über lange Betriebszeiten von beispielsweise 15 oder 20 Jahren gewährleistet ist. Andererseits handelt es sich bei solchen Ultraschalldurchflussmessern um Geräte, die in großen Stückzahlen hergestellt werden und bei denen schon kleine Verbesserungen, sei es bei der Herstellung oder der Montage zu erheblichen Einsparungen führen können.

Vor diesem Hintergrund liegt der anmeldungsgemäßen Erfindung die Aufgabe zugrunde, einen Ultraschalldurchflussmesser der eingangs genannten Art zu verbessern. Im Weiteren soll ein Verfahren zum Erzeugen einer Anpresskraft zwischen einem Ultraschallwandler und einer Kanalwandung eines Ultraschalldurchflussmessers bereitgestellt werden, welches eine einfache und sichere, langzeitstabile Kraftbeaufschlagung gewährleistet.

Der vorrichtungsmäßige Teil dieser Aufgabe wird durch einen Ultraschalldurchflussmesser mit den in Anspruch 1 angegebenen Merkmalen gelöst. Vorteilhafte Ausgestaltungen der Erfindung sind der nachfolgenden Beschreibung, den Ansprüchen und den Zeichnungen zu entnehmen.

Der erfindungsgemäße Ultraschalldruchflussmesser weist ein Gehäuse auf und einen gehäuseseitigen Kanal zum Durchleiten eines Fluids, dessen Durchfluss gemessen werden soll. Hierzu ist mindestens ein Ultraschallwandler an einer den Kanal begrenzenden Wandung innerhalb des Gehäuses angeordnet. Gemäß der Erfindung ist der mindestens eine Ultraschallwandler mittels mindestens einer unlösbaren Schnapp- und/oder Klemmverbindung innerhalb des Gehäuses festgelegt.

Der Ultraschalldurchflussmesser gemäß der Erfindung ist insbesondere zum Erfassen der Durchflussmenge einer Flüssigkeit vorgesehen. Hierzu ist ein Kanal an oder in dem Gehäuse vorgesehen, sowie mindestens ein Ultraschallwandler, der an einer den Kanal begrenzenden Wandung unmittelbar oder mittelbar innerhalb des Gehäuses angeordnet ist. Der Kanal ist entweder Teil des Gehäuses, jedoch sowohl gegenüber dem Inneren des Gehäuses als auch gegenüber der Umgebung dicht, oder durch ein Rohr gebildet, welches das Gehäuses durchsetzt oder zumindest mit einem Teil seiner Wandung in das Innere des Gehäuses führt, sodass dort ein Ultraschallwandler so angebracht werden kann, dass Ultraschallwellen auf die Flüssigkeit und umgekehrt übertragen werden können. Grundsätzlich ist für die Messung mindestens ein Ultraschallwandler erforderlich, in der Praxis bewährt hat sich die Anordnung von zwei Ultraschallwandler von denen einer als Sender und der andere als Empfänger bzw. umgekehrt arbeitet. Um den Ultraschallwandler schnell und einfach innerhalb des Gehäuses festzulegen, ist gemäß der Erfindung vorgesehen, eine Schnapp- und/oder Klemmverbindung innerhalb des Gehäuses anzuordnen, die unlösbar ist und die den Ultraschallwandler in einem einfachen Montageschritt zuverlässig und langzeitstabil innerhalb des Gehäuses, insbesondere in Anlage an die den Kanal begrenzende Wandung festlegt. Dabei handelt es sich bei der Verbindung bevorzugt um eine Schnapp- und Klemmverbindung, es kann jedoch bei geeigneter Ausgestaltung auch eine Schnapp- oder Klemmverbindung genügen, um dies zu erzielen.

Im Gegensatz zum Stand der Technik kann bei geeigneter Ausgestaltung dieser Schnapp- und Klemmverbindung die Festlegung des oder der Ultraschallwandler innerhalb des Gehäuses durch einen einfachen Steckvorgang erfolgen, ein Rotieren von Werkzeugen wie sie für die im Stand der Technik vorgesehenen Schraubverbindungen erforderlich ist, kann entfallen.

Das erfindungsgemäße Verfahren ermöglicht das Erzeugen einer Anpresskraft zwischen einem z.B. piezoelektrischen Ultraschallwandler und einer Kanalwandung des Ultraschalldurchflussmessers dadurch, dass der Ultraschallwandler mittels einer Schnapp- und/oder Klemmverbindung befestigt und gleichzeitig mit Federkraft beaufschlagt wird. Dadurch, dass mit der Befestigung gleichzeitig eine Federkraftbeaufschlagung erfolgt, wird eine langzeitstabile Anpresskraft gewährleistet, ohne dass eine gesonderte Montage der hierfür erforderlichen Federmittel vorgesehen sein muss. Die für die Federkrafterzeugung erforderliche Vorspannung wird dabei in einem Arbeitsgang mit der Befestigung erzeugt, was vorteilhaft ist.

Besonders vorteilhaft ist es, wenn innerhalb des Gehäuses für jeden Ultraschallwandler mindestens ein Klemmzapfen vorgesehen ist, und dass jeder Ultraschallwandler mit einer Klemmfederscheibe am Klemmzapfen festgelegt ist. Bevorzugt ist dabei für jeden Ultraschallwandler ein Klemmzapfenpaar vorgesehen, welches zu beiden Seiten des Ultraschallwandlers angeordnet ist. Diese Zapfen können insbesondere wenn das Gehäuse als Spritzgussbauteil ausgebildet ist, vom Gehäuseboden senkrecht aufsteigend angeformt sein, wie dies weiter unten noch im Einzelnen beschrieben wird. Wenn, wie typischerweise bei derartigen Ultraschalldurchflussmessern, zwei Ultraschallwandler nahe den Kanalenden im Gehäuse vorgesehen sind, dann erfolgt die Befestigung vorteilhaft mittels vier Klemmzapfen, jeweils paarweise an einer Seite, wobei mit diesen Klemmzapfen vorteilhaft auch die Platine innerhalb des Gehäuses festgelegt werden kann, welche die elektrischen und elektronischen Bauteilen trägt. Die Klemmzapfen können zylindrisch, leicht konisch zulaufend aber auch einen eckigen Querschnitt haben, je nach vorgesehener Klemmfederscheibe. Klemmfederscheiben zählen zum Stand der Technik, sind typischerweise aber nicht notwendigerweise aus Metall, weisen meist einen umfänglich geschlossenen Ringkörper auf, aus dem flächig nach innen vorkragende Federzungen ragen, welche beim Schieben auf den Klemmzapfen in Achsrichtung des Zapfens gegenüber diesem verspannt werden und eine gewisse Federwirkung ausüben. Die Verbindung ist als nicht lösbare Verbindung konzipiert und kann ggf. durch Rasteinformungen im Zapfen unterstützt sein, beispielsweise durch umlaufende Rillen in geringem axialem Abstand zueinander. Dabei ist der Zapfendurchmesser stets geringfügig größer als der freie Durchgang innerhalb der Klemmfederscheibe, sodass eine Klemm- und eine Federwirkung beim Aufschieben entsteht.

Meist weist der Ultraschalldurchflussmesser innerhalb des Gehäuses eine Platine mit elektrischen und elektronischen Bauteilen auf sowie einen das Gehäuse verschließenden Deckel, wie dies zum Stand der Technik zählt. Vorteilhaft ist gemäß einer Weiterbildung der Erfindung innerhalb des Gehäuses ein Zwischengehäuse vorgesehen, welches zwischen dem Gehäusedeckel und der Platine im Gehäuse angeordnet ist, welches innerhalb des Gehäuses klemmfederbefestigt ist, und welches Federmittel zur Kraftbeaufschlagung des mindestens einen Ultraschallwandlers und die Klemmfederscheiben aufnimmt und diese vorzugsweise formschlüssig haltert. Ein solches Zwischengehäuse ist insbesondere montagetechnisch von besonderem Vorteil, da dieses zusammen mit den darin eingegliederten Federmitteln zur Kraftbeaufschlagung und den Klemmfederscheiben in einem Arbeitsgang in das Gehäuse eingesetzt werden kann und dabei gleichzeitig die Ultraschallwandler und die Platine innerhalb des Gehäuses befestigt werden und dabei die Federkraft zum Andrücken der Ultraschallwandler an die Kanalwandung erzeugt wird.

Vorteilhaft ist das Zwischengehäuse aus Kunststoff gebildet, typischerweise als Kunststoffspritzgussteil ausgebildet, wobei die Federmittel und die Klemmfederscheiben vorzugsweise aus Metall bestehen und formschlüssig in das Zwischengehäuse oder zwischen dem Gehäuse und dem Zwischengehäuse eingegliedert sind. Auf diese Weise kann in einem Arbeitsgang Platine und Zwischengehäuse im Gehäuse festgelegt werden. Die Platine trägt dabei die Ultraschallwandler, welche jeweils auf einem begrenzt beweglichen Platinenabschnitt angeordnet sind, der durch die Federmittel in axialer Richtung des Ultraschallwandlers an die Kanalwandung angedrückt wird. Dabei können die Federmittel zur Kraftbeaufschlagung eines Ultraschalwandlers in bekannter Weise als Schraubenfedern ausgebildet sein, die dann vorteilhaft zwischengehäuseseitig angeordnet sind, sodass eine gesonderte Montage innerhalb des Gehäuses entfallen kann.

Besonders vorteilhaft ist es allerdings, wenn die Federmittel zur Kraftbeaufschlagung eines Ultraschalwandlers und die Mittel zur Klemmbefestigung des Zwischengehäuses einstückig ausgebildet sind. Dies kann vorteilhaft durch einen Federbügel realisiert werden, der eine Andruckfeder für einen Ultraschallwandler sowie mindestens eine Klemmfederscheibe aufweist. Vorzugsweise ist dieser Federbügel als Federblech ausgebildet, welches einerseits so geformt ist, dass es den Ultraschallwandler mit Federkraft beaufschlagt, also diesen in Einbaulage an die Kanalwandung drückt und andererseits die Klemmfederscheiben bildet. Solche Klemmfederscheiben können ohne weiteres in den Bügelenden ausgebildet sein, sodass für jeden Ultraschallwandler nur ein Federbauteil, nämlich ein solches als Federbügel ausgebildetes Federblech vorzusehen ist, welches vor der Montage vorteilhaft seitlich in das Zwischengehäuse eingegliedert wird, um dann zusammen mit diesem durch einfaches Aufpressen montiert werden zu können.

Grundsätzlich kann ein solcher Federbügel eine Klemmfederscheibe aufweisen und im Übrigen so ausgebildet sein, dass er die erforderliche Klemmkraft für den Ultraschallwandler ausbildet. Bevorzugt sind jedoch zwei Klemmfederscheiben im Federbügel ausgebildet, um eine symmetrische Krafteinleitung auf den Ultraschallwandler zu gewährleisten, sowie eine gute Befestigung.

Um einen solchen Federbügel am Zwischengehäuse festzulegen, ist es vorteilhaft, am Zwischengehäuse ein Zungenpaar vorzusehen, vorzugsweise diametral gegenüberliegend zwei solcher offenen Zungenpaare vorzusehen, die jeweils einen Federbügel formschlüssig aufnehmen und die in montiertem Zustand von dem gehäuseseitigen Klemmzapfenpaar durchsetzt sind. Die Klemmbefestigung erfolgt also über die Klemmfederscheiben, die in den Bügeln ausgebildet sind. Da der Federbügel formschlüssig zwischen den radialen Zungen festgelegt ist, ist damit einerseits der Federbügel zum Zwecke der Montage am Zwischengehäuse festgelegt und andererseits sind nach Einpressen des Zwischengehäuses mit den Federbügeln diese Bauteile in ihrer bestimmungsgemäßen Lage und Funktion im Gehäuse eingegliedert.

Vorteilhaft ist ein Federbügel so ausgebildet, dass er einen in Seitenansicht U-förmigen zentralen Abschnitt aufweist, dessen Steg den Ultraschallwandler oder den Platinenabschnitt, auf dem der Ultraschallwandler angeordnet ist, beaufschlagt. Dabei sind die freien Schenkelenden des U-förmigen zentralen Abschnitts quer nach außen abgebogen, gehen dann jeweils in einen parallel zum Schenkel verlaufenden Abschnitt über und sind mit ihrem freien Endabschnitt zum Schenkel hin abgebogen, wobei jeder Endabschnitt als Klemmfederscheibe ausgebildet ist. Bei dieser Ausbildung wird die Gesamtheit des Bügels als Feder zur Erzeugung der Anpresskraft des Ultraschallwandlers an die Kanalwandung genutzt, wohingegen die in den Endabschnitten eingeformten Klemmfederscheiben zur Klemmbefestigung des Federbügels sowie des Zwischengehäuses, in dem diese formschlüssig eingegliedert sind dienen unter Einschluss der zwischen Gehäuseboden und Zwischengehäuse angeordneten Platine.

In einer alternativen Ausbildung weist der Federbügel ebenfalls einen in Seitenansicht U-förmigen zentralen Abschnitt auf, dessen Steg den Ultraschallwandler oder den Platinenabschitt, auf dem der Ultraschallwandler angeordnet ist, beaufschlagt, geht jedoch dann mit den freien Schenkelenden des U in einen um 180° bogenförmig nach außen abgebogenen Abschnitt über, um dann mit den endseitigen Schenkelenden zu den Schenkel hin bzw. davon weg gerichtete Endabschnitte aufzuweisen, die ebenfalls als Klemmfederscheiben ausgebildet sind und die etwa stegparallel angeordnet sind.

In einer alternativen Ausgestaltung sind die Schenkel des U-förmigen zentralen Abschnitts schräg nach innen zulaufend ausgebildet und die freien Schenkelenden des U schräg nach außen und oben abgebogen, um dann jeweils in einen parallel zum Schenkel verlaufenden Abschnitt überzugehen, wobei sie mit ihrem freien Endabschnitt zum Schenkel hin abgebogen sind, wo wiederrum die Klemmfederscheiben ausgebildet sind. Die Varianz der Form des Bügels ermöglicht eine quasi beliebige Einstellung von Federkraft und Federweg sowie der Kennlinie der Feder. Die vorstehend beschriebenen Federbügel sind nur beispielhaft zu verstehen, die Erfindung beschränkt sich nicht auf einen im zentralen Abschnitt U-förmigen Federbügel, jedoch ist diese Anordnung konstruktionsbedingt besonders vorteilhaft.

Um die Federkennlinie des Bügels zu beeinflussen, kann das Blech abschnittsweise in unterschiedlicher Dicke ausgebildet sein. Fertigungstechnisch einfacher ist es jedoch, ein Blech im Wesentlichen konstanter Dicke zu verwenden und abschnittsweise Ausnehmungen vorzusehen, insbesondere in den Bereichen zwischen dem zentralen U-förmigen Abschnitt und den Endabschnitten. Hierdurch kann die Feder weicher gestaltet werden, ohne die erforderliche Klemmkraft im Bereich der Klemmfederscheiben zu verringern.

Grundsätzlich kann der oder können die Ultraschallwandler als Einzelbauteile angeordnet werden, besonders vorteilhaft ist es jedoch, diese platinenseitig anzuordnen, da dies den Einbau und die elektrische Verdrahtung vereinfacht. Um die erforderliche Beweglichkeit sicherzustellen ist es von Vorteil, für jeden Ultraschallwandler einen Platinenabschnitt vorzusehen, welcher begrenzt beweglich gegenüber der übrigen Platine ist, also typischerweise nur durch einen langgestreckten Arm mit der übrigen Platine verbunden ist, sodass dieser Abschnitt elastisch bewegbar an der Platine angeordnet ist. Die Befestigung des Ultraschallwandlers an diesem Platinenabschnitt erfolgt vorteilhaft mit einem dauerelastischen elektrisch leitenden Klebstoff, der einerseits die elektrische Kontaktierung sicherstellt, andererseits die Befestigung am Platinenabschnitt. Durch die Dauerelastizität ist sichergestellt, dass auch nach Jahren des Einsatzes dort keine Versprödung auftritt und somit der gewünschte Verbund mechanisch und elektrisch erhalten bleibt.

Als Ultraschallwandler werden vorteilhaft piezoelektrische Wandlerelemente eingesetzt, diese haben typischerweise eine zylindrische Form und sind an ihren zwei gegenüberliegenden Stirnseiten kontraktierbar. Solche Ultraschallwandler sind vorteilhaft an einer Stirnseite mit der Platine bzw. den Platinenabschnitt elektrisch und mechanisch verbunden und können mit der anderen Stirnseite über eine gesonderte Verdrahtung elektrisch mit der Platine verbunden sein. Vorteilhaft kann diese elektrisch leitende Verbindung zwischen der von der Platine abgewandten Stirnseite des Ultraschallwandlers zu der Platine hin durch den Federbügel erfolgen. Da dieser typischerweise aus Metall ist, ist er elektrisch leitend, durch die Federkraftbeaufschlagung ist darüber hinaus eine zuverlässige Kontaktierung sichergestellt.

Vorteilhaft ist innerhalb des Gehäuses des Ultraschalldurchflussmessers ein wasserabsorbierendes Mittel, beispielsweise ein wasseraufnehmender Kunststoff oder ein Trocknungsmittelgranulat vorgesehen, um die durch die durch die Kunststoffgehäusewandung diffundierende Feuchtigkeit zu binden. Dieses wasserabsorbierende Mittel wird vorteilhaft innerhalb des Zwischengehäuses angeordnet. Es kann dort wie in einer Schale aufgenommen werden, was insbesondere bei Aufnahme von Granulaten von Vorteil ist.

Bei Ultraschalldurchflussmessern, wie sie zum Erfassen des Wasserverbrauchs aber auch zur Wärmemengenerfassung eingesetzt werden, zählt es zum Stand der Technik in regelmäßigen Intervallen das Messergebnis drahtlos an einen Empfänger zu übermitteln. Hierzu ist innerhalb des Gehäuses oder am Gehäuserand eine Antenne vorzusehen, um die Senderreichweite bei vergleichsweise kleiner elektrischer Leistung ausreichend groß zu gestalten. Eine solche Antenne ist vorteilhaft innerhalb des Zwischengehäuses angeordnet, beispielsweise an einem Umfangsabschnitt des Zwischengehäuses.

Eine topfförmige Ausgestaltung des Gehäuses ist vorteilhaft, da bei entsprechender Konturierung von Platine und Zwischengehäuse diese formschlüssig gehalten sind und nach dem Aufsetzen der Klemmfederscheiben innerhalb des Gehäuses festgelegt sind. Der Kanal, in dem der Durchfluss gemessen wird, ist einstückig mit dem Gehäuse ausgebildet. Besonders vorteilhaft ist es, wenn der Kanal bodenseitig in das Gehäuse integriert ist, da dann der Gehäuseraum besonders gut genutzt werden kann.

Zum Betrieb der Ultraschallwandler, zur Auswertung der Messergebnisse und zur Übermittlung der Daten benötigt der Ultraschalldurchflussmesser elektrische Energie, die durch in das Gehäuse eingegliederte, typischerweise unterseitig der Platine neben dem Kanal angeordnete Batterien bereitgestellt wird. Die Batterien versorgen das Gerät für einen langen Zeitraum, jedenfalls solange, dass innerhalb dieses Zeitraums keine erneute Eichung/ kein Eingriff in das Gerät erfolgen muss, sodass es zweckmäßig ist, das Gerät als Einwegartikel auszubilden. Dann ist es besonders vorteilhaft, wenn der Deckel dicht mit dem Gehäuse verschweißt wird, um auf diese Weise die innerhalb des Gehäuses befindlichen Bauteile vor Einflüssen der Außenumgebung sicher zu schützen.

Wenn, was vorteilhaft ist, die Platine an ihrer zum Zwischengehäuse weisenden Seite mit einem Display versehen ist, dann ist es zweckmäßig, im Zwischengehäuse fluchtend zum Display einer Ausnehmung vorzusehen und den Deckel in diesem Bereich fluchtend zum Display durchsichtig auszubilden, sodass ein Einblick auf das Display bei geschlossenem Deckel gewährleistet ist. Alternativ kann auch im Zwischengehäuse ein durchsichtiges Fenster fluchtend zum Display ausgebildet sein.

Die Erfindung ist nachfolgend anhand von in der Zeichnung dargestellten Ausführungsbeispielen erläutert. Er zeigen:
- Figur 1: in stark vereinfachter schematischer Explosionsdarstellung, die Platine, das Zwischengehäuse und den Deckel eines Ultraschalldurchflussmessers,
- Figur 2: das Gehäuse eines Ultraschalldurchflussmessers mit eingegliederter Platine und einem Zwischengehäuse mit Deckel in Explosionsdarstellung,
- Figur 3: eine erste Ausführung eines Zwischengehäuses in perspektivischer Ansicht von schräg unten,
- Figur 4: das Zwischengehäuse gemäß Figur 3 in perspektivischer Ansicht mit dem abschließenden Deckel,
- Figur 5: das Zwischengehäuse gemäß Figur 3 mit Deckel in Seitenansicht,
- Figur 6: einen Schnitt längs der Schnittlinie L-L in Figur 5,
- Figur 7: eine andere Ausführung eines Zwischengehäuses mit Federbügeln und Deckel in Explosionsdarstellung,
- Figur 8: eine Seitenansicht der Bauteile gemäß Figur 7 zusammengefügt,
- Figur 9: eine perspektivische Ansicht des Federbügels gemäß Figur 7,
- Figur 10: eine Seitenansicht des Federbügels gemäß Figur 9,
- Figur 11: eine andere Ausführung eines Federbügels in perspektivischer Darstellung,
- Figur 12: eine Seitenansicht des Federbügels gemäß Figur 11,
- Figur 13: eine perspektivische Ansicht einer weiteren Ausführung eines Federbügels,
- Figur 14: eine Seitenansicht des Federbügels gemäß Figur 13,
- Figur 15: eine perspektivische Ansicht einer weiteren Ausführungsform eines Federbügels und
- Figur 16: eine Seitenansicht des Federbügels gemäß Figur 15.

Bei den anhand der Figuren dargestellten Ausführungsvarianten eines Ultraschalldurchflussmessers handelt es sich um einen elektronischen Wasserzähler, dessen grundsätzliche Aufbau und Funktion in EP 3 550 272 B1 beschrieben ist, auf die insoweit verwiesen wird. Er weist ein topfförmiges Gehäuse 1 auf, welches als Kunststoffspitzgussteil ausgebildet ist und im Bereich des Gehäusebodens einen das Gehäuse 1 durchsetzenden Kanal 2 aufweist, mit einem Eingangsanschluss 3 sowie einen Ausgangsanschluss 4, die zur Eingliederung in eine Wasserleitung vorgesehen sind, deren Durchflussmengen mit dem Ultraschalldurchflussmesser erfasst werden soll. In der dargestellten Ausführung sind Gehäuse 1, Kanal 2 und die Ein- und Ausgangsanschlüsse 3,4 als einstückiges Kunststoffspritzgussteil ausgebildet.

In dem Gehäuse 1 ist eine Platine 5 eingegliedert, welche elektrische und elektronische Bauteile des Durchflussmessers trägt. An der nach oben weisenden Seite der Platine 5 ist ein Display 6 angeordnet, an der Unterseite zwei Batterien, welche in Einbaulage zu beiden Seiten des Kanals 2 angeordnet sind. Die Platine 5 weist an zwei diametral gegenüberliegenden Seiten Platinenabschnitte 8 auf, die gegenüber der übrigen Platine begrenzt beweglich sind und lediglich mittels eines Armes 9 an der Platine 5 angebunden sind. Diese Platinenabschnitte 8 tragen an ihrer Unterseite jeweils einen piezoelektrischen Ultraschallwandler 10.

Diese Ultraschallwandler 10 liegen in Einbaulage nahe den Enden des Kanals 2 an der Kanalwandung an, hierzu sind wandungsseitig entsprechenden Einformungen vorgesehen, welche den Ultraschallwandler 10 mit seiner Stirnseite sowie seitlich formschlüssig fixieren.

Die Platine 5 und die an der Kanalwandung des Kanals 2 anliegenden Ultraschallwandler 10 werden in axialer Richtung gesehen durch ein Zwischengehäuse 11 innerhalb des Gehäuses 1 formschlüssig und kraftschlüssig befestigt. Das Zwischengehäuse 11 ist von seiner Außenkontur an die Innenkontur des Gehäuses 1 angepasst und weist fluchtend zum Display 6 auf der Platine 7 eine Ausnehmung 12 auf, zu der fluchtend wiederrum ein durchsichtiger Abschnitt 13 in einem Deckel 14 vorgesehen ist, sodass das Display 6 von außerhalb des Gehäuses 1 ablesbar ist.

Das Zwischengehäuse 11 weist im Bereich fluchtend zu den Platinenabschnitten 8 Ausnehmungen zur Aufnahme von Schraubenfedern 15 auf, welche in Einbaulage eine Anpresskraft auf die Platinenabschnitte 8 ausüben und dadurch die Ultraschalwandler 10 in Richtung zur Kanalwandung des Kanals 2 kraftbeaufschlagen, um eine gute akustische Ein- und Auskopplung in den Kanal 2 und das darin geführte Wasser zu gewährleisten.

Weiterhin sind innerhalb des Zwischengehäuses 11 neben den Schraubenfedern 15 ein Paar von Klemmfederscheiben 16 angeordnet, welche zur Schnapp- und Klemmverbindung des Zwischengehäuses 11 unter Eingliederung der Platine 5 innerhalb des Gehäuses 1 vorgesehen sind. Hierzu sind vom Boden des Gehäuses 1 aufragende Klemmzapfen 17 vorgesehen, welche paarweise angeordnet sind, derart, dass sie die Platine 5 so durchsetzen, dass ein Klemmzapfen 17 eines Klemmzapfenpaares zu einer Seite und der andere Klemmzapfen 17 eines Klemmzapfenpaares zur anderen Seite eines Platinenabschnitts 8 bzw. eines Ultraschallwandlers 10 angeordnet ist.

Das Zwischengehäuse 11, welches nach oben hin durch den Deckel 14 abgeschlossen wird, weist seitlich der Ausnehmung 12 Hohlräume 18 auf, die zur Aufnahme von Trocknungsmitteln vorgesehen sind und durch den Deckel 14 abgeschlossen sind. Weiterhin ist im Zwischengehäuse eine Antenne 32 integriert.

Im Zwischengehäuse 11 sind die Schraubenfedern 15 und die Klemmfederscheiben 16 so angeordnet, dass das Zwischengehäuse 11 zusammen mit diesen Bauteilen als quasi ein Stück zusammen mit dem Deckel 14 (oder auch ohne diesen, wenn dieser später montiert wird) von oben in das Gehäuse 1 über der Platine 5 eingliederbar sind. Das Zwischengehäuse 11 wird nach entsprechender Ausrichtung mit ausreichender Anpresskraft in das Gehäuse 1 eingedrückt, dabei werden die Klemmfederscheiben 16 durch die freien Enden der Klemmzapfen 17 durchsetzt und klemmbefestigen das Zwischengehäuse unter Eingliederung der Platine 5 unlösbar innerhalb des Gehäuses 1. Die Befestigung erfolgt durch reine Druckkraft, also werkzeugfrei mit einer vorgegebenen Anpresskraft, bis das Zwischengehäuse seine bestimmungsgemäße Lage innerhalb des Gehäuses 1 erreicht hat. Diese Lage wird unlösbar durch die Klemmfederscheiben 16 auf den Klemmzapfen 17 fixiert. In der dargestellten Ausführung sind die Klemmzapfen zylindrisch und glatt, sie können jedoch mit einer Vielzahl umfänglicher Rillen versehen sein, um neben der Klemmfunktion auch eine Schnappfunktion zu erfüllen.

In dieser bestimmungsgemäßen Position des Zwischengehäuses sind die Schraubenfedern 15 vorgespannt und im Zwischengehäuse 11 abgestürzt. Mit ihren freien Enden drücken sie auf die Platinenabschnitte 8, an deren Unterseite die Ultraschallwandler 10 angeordnet sind, sodass sie im Ergebnis die Ultraschallwandler axial in Richtung auf die Wandung des Kanals 2 anpressen.

Der Deckel 14 ist im Zwischengehäuse 11 schnappbefestigt und kann vor Einfügen des Zwischengehäuses 11 in das Gehäuse 1 aufgesetzt werden, aber auch nach dessen Einfügen. Der Deckel wird abschließend umfänglich mit dem Gehäuse 1 verschweißt, sodass das Gehäuseinnere hermetisch gegenüber der Umgebung abgeschlossen ist.

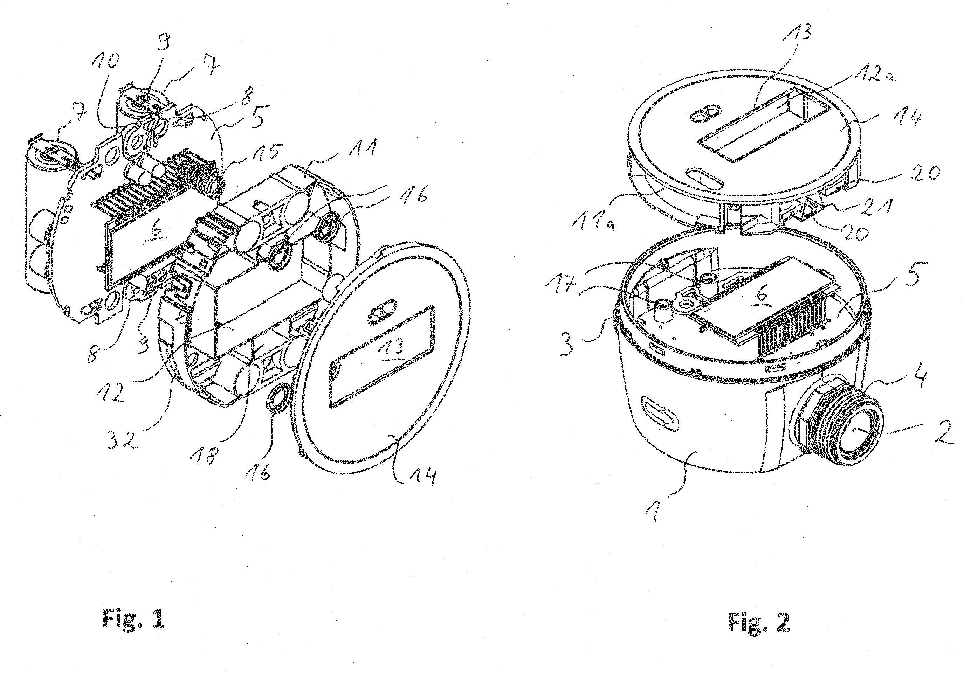

Das Zwischengehäuse 11 weist eine Seitenwandung auf, die nahe der Innenseite des Gehäuses 1 mit geringem Spiel angeordnet ist. Bei dem anhand der Figuren 2 und 7 bis 8 dargestellten Zwischengehäuse 11a ist die Seitenwand mit deutlichem Abstand zum Inneren des Gehäuses 1 angeordnet und weist einen diesen Zwischenraum überbrückenden Kragen 19 auf. Der wesentliche Unterschied zwischen dem Zwischengehäuse 11a und dem Zwischengehäuse 11 liegt in der Ausbildung und Anordnung der Klemmfederscheiben und der Federn zur Erzeugung der Anpresskraft der Ultraschallwandler 10.

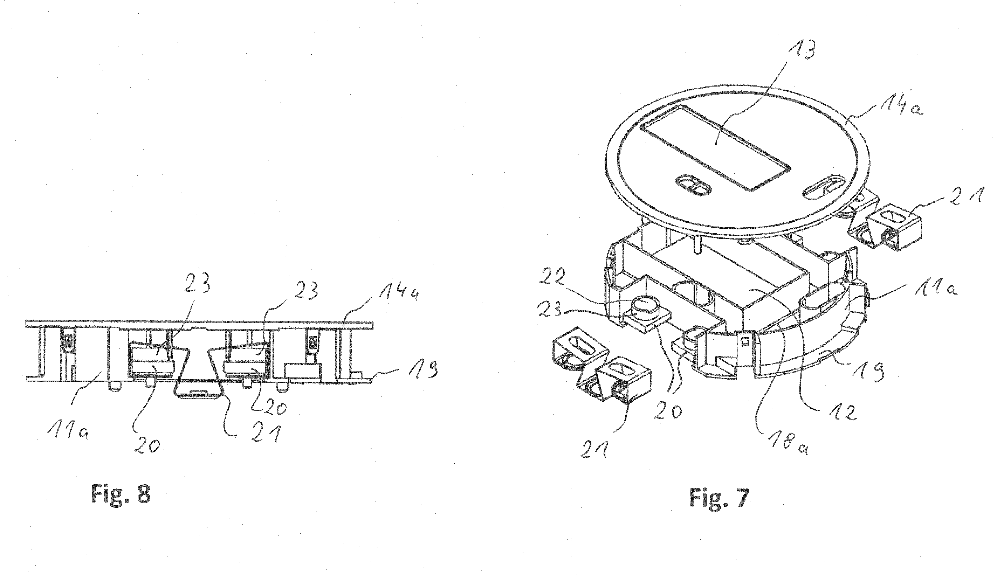

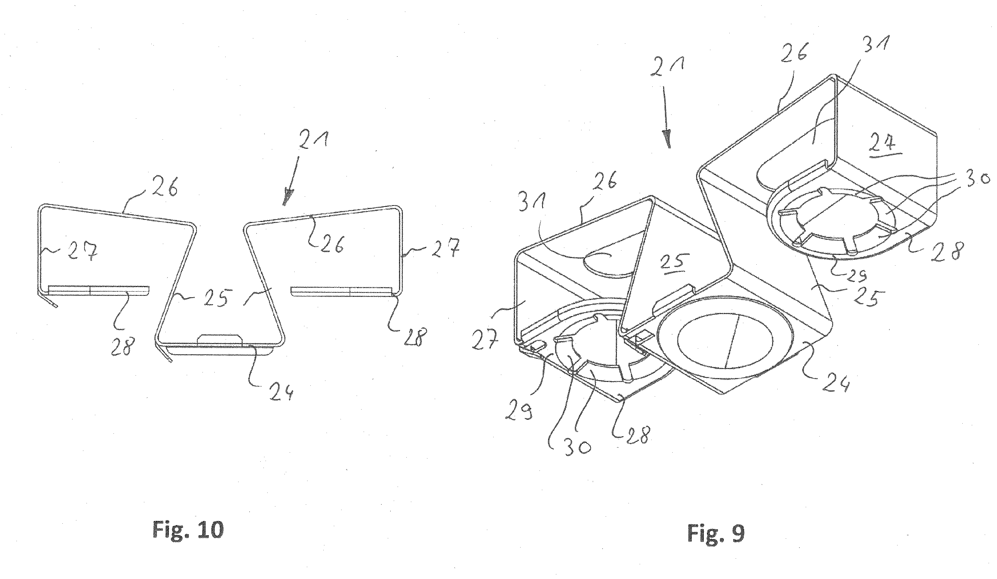

Bei dem Zwischengehäuse 11a sind an beiden Seiten, etwa in dem Bereich, wo der Kanal 2 durch das Gehäuse 1 verläuft und wo bei dem Zwischengehäuse 11 die Schraubenfedern 15 und Klemmfederscheiben 16 angeordnet sind, radial auskragende Zungen 20 vorgesehen, die zur Aufnahme von Federbügeln 21 dienen. Wie die Figuren 7 und 8 verdeutlichen, sind die Zungen 20 paarweise angeordnet, haben eine quaderförmige flache Form, weisen jeweils eine zentrale Ausnehmung 22 auf und sind an ihrer Oberseite mit einem Ringabschnitt 23 verstärkt, welcher die Ausnehmung 22 fluchtend fortsetzt. Diese Anordnung dient zur Aufnahme des Federbügels 21, der anhand der Figuren 9 und 10 vergrößert dargestellt ist.

Dieser Federbügel 21 ist aus einem streifenförmigen Federblech gebildet und hat in Seitenansicht (Figur 10) einen zentralen im Wesentlichen U-förmigen Abschnitt mit einem Steg 24 und zwei Schenkeln 25, die bei dieser Ausführung leicht schräg nach oben zusammenlaufen, um dann um 90° abgewinkelt schräg zur Seite und nach oben auszukragen. Diese Abschnitte 26 gehen in Abschnitte 27 über, welche in Einbaulage nach unten, also zum Gehäuseboden hin gerichtet sind und deren freie Endabschnitte 28 zu den Schenkeln 25 hin verlaufen. Diese Endabschnitte 28 sind als Klemmfederscheiben ausgebildet, wie insbesondere aus Figur 9 ersichtlich ist. Diese Endabschnitte 28 weisen somit einen ringförmigen Teil 29 auf, von dem radial nach innen ragende Segmentabschnitte 30 ausgehen. Die Segmentabschnitte 30 bilden Federzungen, ihre Enden einen Kreisring, der kleiner als der Außenumfang eines Klemmzapfens 17 ist. Diese Federbügel 21 werden seitlich in das Zwischengehäuse eingegliedert derart, dass die Zungen 20 mit den Ringabschnitten 23 in die zwischen den Endabschnitten 28 und den Abschnitten 26 gebildeten Freiraum eingreifen und den Federbügel 21 dort halten.

Die Federbügel 21 übernehmen dabei mit ihren Endabschnitten 28, welche als Klemmfederscheiben ausgebildet sind, die Funktion der Klemmfederscheiben 16 bei der vorbeschriebenen Ausführungsform. Anders als bei der vorbeschriebenen Ausführungsform wird jedoch zur Erzeugung einer auf den Ultraschallwandler 10 wirkenden Anpresskraft nicht eine gesonderte Feder 15 verwendet, sondern es wird die Federwirkung des Federbügels 21, insbesondere der schräg gestellten Schenkel 25 sowie der sich daran anschließenden Abschnitte 26 genutzt. Die Abschnitte 26 sind mit Ausnehmungen 31 versehen, die dazu dienen, die Federkernlinie einzustellen, hier insbesondere die Feder weicher zu gestalten.

Die Federbügel 21 werden also zunächst seitlich in das Zwischengehäuse 11 eingegliedert, welches dann zusammen mit den Federbügeln auf die Klemmzapfen 17 innerhalb des Gehäuses 6 unter Einschluss der Platine 5 aufgesetzt werden. Durch Andruck des Zwischengehäuses 11a in Richtung zum Gehäuseboden des Gehäuses 1 wird das Zwischengehäuse 11a mittels der in den Endabschnitten 28 gebildeten Klemmfederscheiben auf den Klemmzapfen 17 klemmbefestigt, wobei der übrige Teil des Federbügels 21 axial einfedert und damit vorgespannt wird, um eine Federkraft auf einen Platinenabschnitt 8 auszuüben, an welchem der Ultraschallwandler 10 angeordnet ist, um den Ultraschallwandler 10 an die Kanalwandung anzupressen.

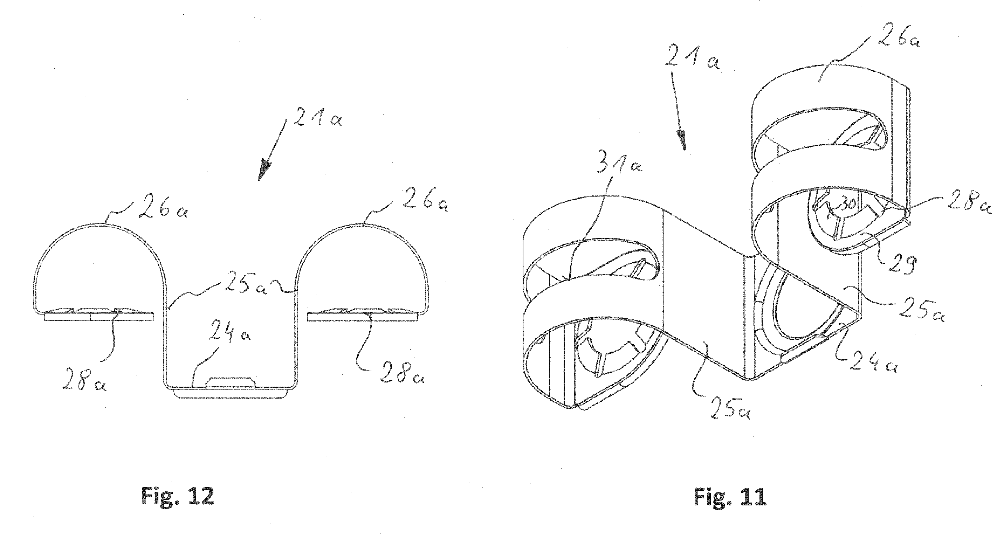

Anhand der Figuren 11 und 12 ist ein Federbügel 21a dargestellt, welcher ebenfalls einen zentralen in Seitenansicht U-förmigen Abschnitt aufweist, dessen Steg 24a etwa rechtwinklig zu den Schenkel 25a steht. Dort sind jedoch die Schenkelenden in einem kreisförmig um 180° abgebogenen Abschnitt 26a fortgesetzt, an dessen Enden ebenfalls nach innen kragende Endabschnitte 28a gebildet sind, welche als Klemmfederscheiben ausgebildet sind. In dem bogenförmigen Abschnitt 26a ist eine Ausnehmung 31a vorgesehen, welche eine Materialschwächung in diesem Bereich zur Einstellung der gewünschten Federkernlinie bildet. Die Funktion dieser Federbügel 21a entspricht der der Federbügel 21 wie vorbeschrieben.

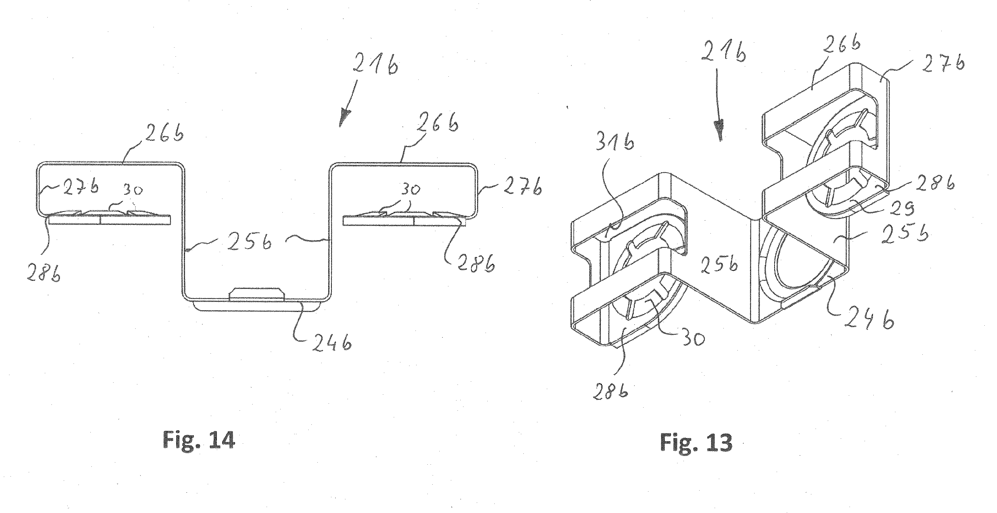

Eine alternative Ausgestaltung des Federbügels ist anhand der Figuren 13 und 14 dargestellt. Der Federbügel 21b weist ebenfalls ein im Wesentlichen U-förmigen zentralen Teil mit einem Steg 24b und Schenkeln 25b auf, die rechtwinklig vom Steg abgebogen sind. Die Schenkelenden sind rechtwinklig zu Abschnitten 26b abgebogen, die wiederrum rechtwinklig zu schenkelparallelen kurzen Abschnitten 27b um 90° abgebogen sind, welche wiederrum um 90° und zu den Schenkeln 25b gerichtete Endabschnitte 28b aufweisen, welche als Klemmfederscheiben ausgebildet sind. Die Federbügel 21b weisen im Wesentlichen nahezu rechtwinklige Abwinklungen auf, jedoch vergleichsweise großflächige Ausnehmungen 31b, welche sich über die gesamte Länge des Abschnitts 26b sowie über Teile vom Schenkel 25b und vom Abschnitt 27b erstrecken.

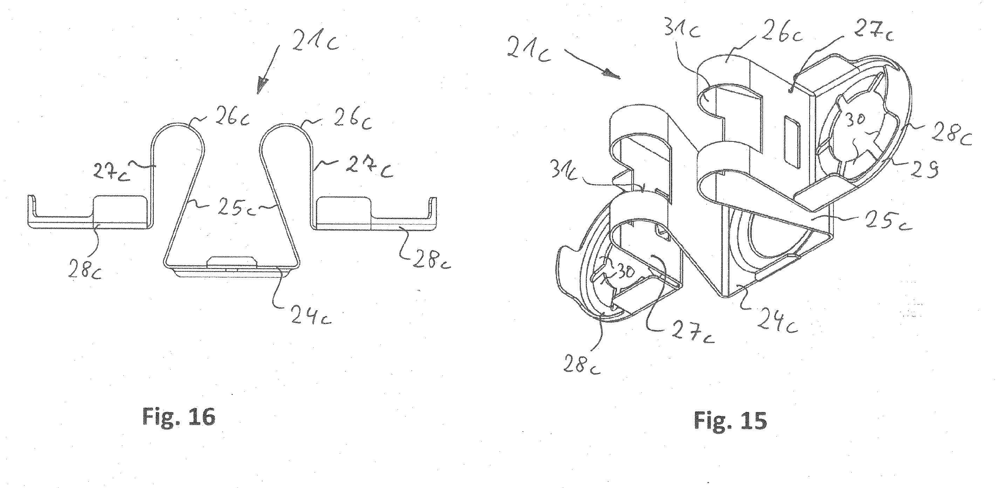

Eine weitere Ausführungsvariante eines Federbügels ist anhand der Figuren 15 und 16 dargestellt. Der Federbügel 21c weist ebenfalls einen U-förmigen zentralen Abschnitt mit einem Steg 24c und zwei sich von dort leicht nach innen geneigten Schenkeln 25c auf. Die Schenkelenden sind in Abschnitten 26c um mehr als 180° derart gebogen, dass die sich daran anschließenden Abschnitte 27c senkrecht zum Steg 24c erstrecken, wobei die Endabschnitte 28c wiederrum um 90° nach au-βen abgebogen sind und dort als Klemmfederscheiben ausgebildet sind. Auch bei dieser Ausführung sind Ausnehmungen 31c vorgesehen, und zwar im Bereich der Abschnitte 26c.

Alle vorbeschriebenen Federbügel haben die eingangs beschriebene Funktion, werden seitlich in das Zwischengehäuse 11a eingegliedert und zusammen mit diesem auf den Klemmzapfen 17 des Gehäuses 1 aufgesetzt und damit unlösbar klemmbefestigt, wobei durch die Anpresskraft beim Klemmbefestigen die Feder als Ganzes vorgespannt wird um mit ihrem Steg 24-24c auf den Platinenabschnitt 8 und damit den darunter liegenden Ultraschallwandler 10 Federkraft auszuüben.

### Bezugszeichenliste

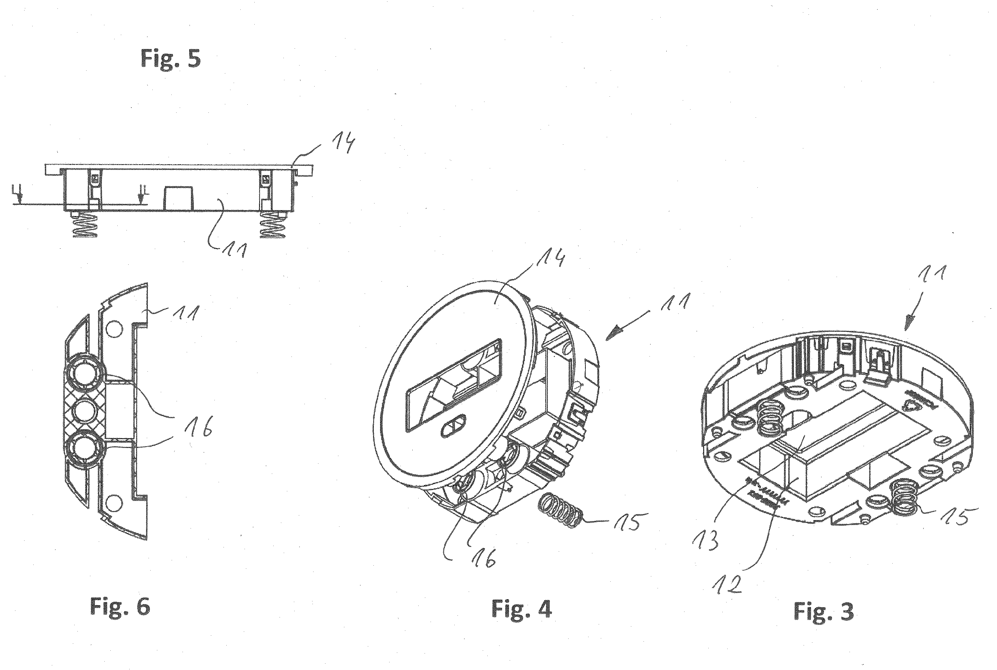

- 1: Gehäuse
- 2: Kanal
- 3: Eingangsanschluss
- 4: Ausgangsanschluss
- 5: Platine
- 6: Display
- 7: Batterien
- 8: Platinenabschnitte
- 9: Arme
- 10: Ultraschallwandler
- 11: Zwischengehäuse in den Figuren 1 und 3 bis 5
- 11a: Zwischengehäuse in den Figuren 2, 7 und 8
- 12: Ausnehmung im Zwischengehäuse
- 13: durchsichtiger Abschnitt im Deckel
- 14: Deckel
- 15: Schraubenfedern
- 16: Klemmfederscheiben
- 17: Klemmzapfen
- 18: Hohlräume im Zwischengehäuse
- 19: Kragen am Zwischengehäuse 11a
- 20: Zungen des Zwischengehäuses 11a
- 21: Federbügel
- 21a,b,c: Federbügel
- 22: Ausnehmungen in den Zungen
- 23: Ringabschnitte
- 24: Steg des U-förmigen Bügels
- 24a,b,c: Steg
- 25: Schenkel des U-förmigen Bügels
- 25a,b,c: Schenkel
- 26: Bügelabschnitte
- 26a,b,c: Abschnitte
- 27: Bügelabschnitte
- 27b,c: Abschnitte
- 28: Endabschnitte des Bügels
- 28a,b,c: Endabschnitte
- 29: ringförmiger Teil
- 30: Segmentabschnitte
- 31: Ausnehmungen
- 31a,b,c: Ausnehmungen
- 32: Antenne

## Patentansprüche

1. Ultraschalldurchflussmesser mit einem Gehäuse (1), mit einem einstückig mit dem Gehäuse (2) ausgebildeten Kanal (2) zum Durchleiten eines Fluids, dessen Durchfluss gemessen werden soll, mit mindestens einem Ultraschallwandler (10), der an einer den Kanal (2) begrenzenden Wandung innerhalb des Gehäuses (1) angeordnet ist, **dadurch gekennzeichnet, dass** der mindestens eine Ultraschallwandler (10) mittels mindestens einer unlösbaren Schnapp- und/oder Klemmverbindung (16, 17) innerhalb des Gehäuses (1) festgelegt ist.

2. Ultraschalldurchflussmesser nach Anspruch 1, **dadurch gekennzeichnet, dass** innerhalb des Gehäuses (1) für jeden Ultraschallwandler (10) mindestens ein Klemmzapfenpaar (17) vorgesehen ist, und dass jeder Ultraschallwandler (10) mit Klemmfederscheiben (16, 28, 28a-c) am Klemmzapfenpaar (17) festgelegt ist.

3. Ultraschalldurchflussmesser nach einem der vorhergehenden Ansprüche, **dadurch gekennzeichnet, dass** innerhalb des Gehäuses (1) eine Platine (5) mit elektrischen und elektronischen Bauteilen (6, 7) angeordnet ist, dass ein das Gehäuse (1) verschließender Deckel (14) und ein zwischen Gehäusedeckel (14) und Platine (5) im Gehäuse (1) angeordnetes Zwischengehäuse (11, 11a) vorgesehen ist, das innerhalb des Gehäuses (1) klemmfederbefestigt ist und Federmittel (15, 21) zur Kraftbeaufschlagung des mindestens einen Ultraschallwandlers (10) und Klemmfederscheiben (16, 28, 28a-c) formschlüssig haltert.

4. Ultraschalldurchflussmesser nach Anspruch 3, **dadurch gekennzeichnet, dass** das Zwischengehäuse (11, 11a) aus Kunststoff gebildet ist und die Federmittel (15, 21) und die Klemmfederscheiben (16, 28, 28a-c) aus Metall bestehen und formschlüssig in das Zwischengehäuse (11, 11a) oder zwischen Gehäuse (1) und Zwischengehäuse (11, 11a) eingegliedert sind.

5. Ultraschalldurchflussmesser nach Anspruch 3 oder 4, **dadurch gekennzeichnet, dass** die Federmittel (15) zur Kraftbeaufschlagung eines Ultraschallwandlers (10) durch mindestens eine zwischengehäuseseitig angeordnete Schraubenfeder (15) gebildet sind.

6. Ultraschalldurchflussmesser nach Anspruch 3 oder 4, **dadurch gekennzeichnet, dass** die Federmittel (21) zur Kraftbeaufschlagung eines Ultraschallwandlers (10) als Federbügel (21) und die Klemmfederscheiben als Endabschnitte (28, 28a-c) des Federbügels (21) einstückig ausgebildet sind.

7. Ultraschalldurchflussmesser nach Anspruch 6, **dadurch gekennzeichnet, dass** der Federbügel (21) durch ein Federblech (21) gebildet ist.

8. Ultraschalldurchflussmesser nach Anspruch 7, **dadurch gekennzeichnet, dass** das Federblech (21) in seinen Endabschnitten (28, 28a-c) zwei Klemmfederscheiben zur Befestigung auf einem gehäuseseitigen Klemmzapfenpaar(17) bildet.

9. Ultraschalldurchflussmesser nach Anspruch 8, **dadurch gekennzeichnet, dass** am Zwischengehäuse (11a) mindestens ein Zungenpaar (20) vorgesehen ist, welches den Federbügel (21) formschlüssig aufnimmt und von dem Klemmzapfenpaar (17) durchsetzt ist.

10. Ultraschalldurchflussmesser nach einem der Ansprüche 6 bis 9, **dadurch gekennzeichnet, dass** der Federbügel (21b) einen in Seitenansicht U-förmigen zentralen Abschnitt aufweist, dessen Steg (24b) den Ultraschallwandler (10) oder den Platinenabschnitt (8), auf dem der Ultraschallwandler (10) angeordnet ist, beaufschlagt, wobei freie Schenkelenden (26b) des U-förmigen zentralen Abschnitts quer nach außen abgebogen sind, dann jeweils in einen parallel zum Schenkel verlaufenden Abschnitt (27b) übergehen und mit einem freien Endabschnitt (28b) zum Schenkel (25b) hin abgebogen sind, wobei jeder Endabschnitt (28b) als Klemmfederscheibe ausgebildet ist.

11. Ultraschalldurchflussmesser nach einem der Ansprüche 6 bis 9, **dadurch gekennzeichnet, dass** der Federbügel (21a, 21c) einen in Seitenansicht U-förmigen zentralen Abschnitt aufweist, dessen Steg (24a, 24c) den Ultraschallwandler (10) oder den Platinenabschnitt (8), auf dem der Ultraschallwandler (10) angeordnet ist, beaufschlagt, wobei freie Schenkelenden (26a, 26c) des U-förmigen zentralen Abschnitts um 180 Grad bogenförmig nach außen abgebogen sind und endseitig stegparallele Endabschnitte (28a, 28c) aufweisen, die als Klemmfederscheiben ausgebildet sind.

12. Ultraschalldurchflussmesser nach einem der Ansprüche 6 bis 9, **dadurch gekennzeichnet, dass** der Federbügel (21) einen in Seitenansicht U-förmigen zentralen Abschnitt aufweist, dessen Steg (24) den Ultraschallwandler (10) oder den Platinenabschnitt (8), auf dem der Ultraschallwandler (10) angeordnet ist, beaufschlagt, wobei die Schenkel (25) des U-förmigen zentralen Abschnitts schräg nach innen zulaufen und die freien Schenkelenden (26) des U-förmigen zentralen Abschnitts schräg nach außen und oben abgebogen sind, dann jeweils in einen parallel zum Schenkel verlaufenden Abschnitt (27) übergehen und mit einem freien Endabschnitt (28) zum Schenkel (26) hin abgebogen sind, wobei jeder Endabschnitt (28) als Klemmfederscheibe ausgebildet ist.

13. Ultraschalldurchflussmesser nach einem der Ansprüche 6 bis 12, **dadurch gekennzeichnet, dass** der Federbügel (21) abschnittsweise Ausnehmungen (31) aufweist.

14. Ultraschalldurchflussmesser nach einem der vorhergehenden Ansprüche, **dadurch gekennzeichnet, dass** ein Ultraschallwandler (10) an einem Platinenabschnitt (8) einer Platine (5) angeordnet ist, der gegenüber der übrigen Platine (5) elastisch bewegbar angeordnet ist, und dass der Ultraschallwandler (10) mit einem dauerelastischen elektrisch leitenden Klebstoff mit dem Platinenabschnitt (8) verbunden ist.

15. Ultraschalldurchflussmesser nach einem der Ansprüche 6 bis 14, **dadurch gekennzeichnet, dass** der Ultraschallwandler (10) an zwei gegenüberliegenden Stirnseiten kontaktiert ist, an einer Stirnseite mit einer Platine (5) oder einem Platinenabschnitt (8) und mit der anderen Stirnseite über den Federbügel (21) mit der Platine (5) elektrisch leitend verbunden ist.

16. Ultraschalldurchflussmesser nach einem der Ansprüche 3 bis 15, **gekennzeichnet durch** eines oder mehrere der folgenden Merkmale:
- das Zwischengehäuse (11) nimmt wasserabsorbierende Mittel auf,
- das Zwischengehäuse (11) nimmt eine Antenne auf,
- das Gehäuse (1) ist topfförmig ausgebildet,
- der Kanal (2) ist bodenseitig in das Gehäuse (1) integriert,
- das Gehäuse (1) ist als Kunststoffspritzgussteil ausgebildet,
- der Deckel (14) ist dicht mit dem Gehäuse (1) verschweißt,
- die Platine (5) ist an ihrer zum Zwischengehäuse (11) weisenden Seite mit einem Display (6) versehen,
- das Zwischengehäuse (11) weist fluchtend zum Display (6) eine Ausnehmung (12) auf,
- der Deckel (14) ist zumindest im Bereich der Ausnehmung (12) fluchtend zum Display (6) durchsichtig ausgebildet, und
- es sind zwei Ultraschallwandler (10) an diametral gegenüberliegenden Abschnitten (8) der Platine (5) vorgesehen und durch die Federmittel (15, 21) kraftbeaufschlagt.

## Claims

1. An ultrasound flow measuring device with a housing (1), with a channel (2) formed integrally with the housing (2) for the passage of a fluid, the flow of which is to be measured, with at least one ultrasound transducer (10), which is arranged within the housing (1) on a wall delimiting the channel (2), **characterized in that** the at least one ultrasound transducer (10) is fixed within the housing (1) by means of at least one non-releasable snap and/or clamping connection (16, 17).

2. The ultrasound flow measuring device according to claim 1, **characterized in that** at least one clamping pin pair (17) is provided within the housing (1) for each ultrasound transducer (10) and that each ultrasound transducer (10) is fixed with clamping spring disks (16, 28, 28a-c) on the clamping pin pair (17).

3. The ultrasound flow measuring device according to one of the preceding claims, **characterized in that** a printed circuit board (5) with electrical and electronic components (6, 7) is arranged within the housing (1), that a cover (14) closing the housing (1) and an intermediate housing (11, 11a) arranged in the housing (1) between housing cover (14) and printed circuit board (5) is provided, said intermediate housing is fastened within the housing (1) by means of a clamping spring and holds spring means (15, 21) in a positive manner for applying a force to the at least one ultrasound transducer (10) and clamping spring disks (16, 28, 28a-c)

4. The ultrasound flow measuring device according to claim 3, **characterized in that** the intermediate housing (11, 11a) is made of plastic and the spring means (15, 21) and the clamping spring disks (16, 28, 28a-c) consist of metal and are incorporated in a positive manner into the intermediate housing (11, 11a) or between housing (1) and intermediate housing (11, 11a).

5. The ultrasound flow measuring device according to claim 3 or 4, **characterized in that** the spring means (15) for applying a force to an ultrasound transducer (10) are formed by at least one helical spring (15) arranged on the intermediate housing side.

6. The ultrasound flow measuring device according to claim 3 or 4, **characterized in that** the spring means (21) for applying a force to an ultrasound transducer (10) as spring clips (21) and the clamping spring disks as end sections (28, 28a-c) of the spring clip (21) are formed integrally.

7. The ultrasound flow measuring device according to claim 6, **characterized in that** the spring clip (21) is formed by a spring plate (21).

8. The ultrasound flow measuring device according to claim 7, **characterized in that** the spring plate (21) forms two clamping spring disks in its end sections (28, 28a-c) for fastening to a housing-side clamping pin pair (17).

9. The ultrasound flow measuring device according to claim 8, **characterized in that** at least one tongue pair (20) is provided on the intermediate housing (11a), which tongue pair receives the spring clip (21) in a positive manner and through which the clamping pin pair (17) passes.

10. The ultrasound flow measuring device according to one of claims 6 to 9, **characterized in that** the spring clip (21b) has a central section, which is U-shaped in the side view, the web (24b) of which acts on the ultrasound transducer (10) or the printed circuit board section (8), on which the ultrasound transducer (10) is arranged, wherein free leg ends (26b) of the U-shaped central section are bent transversely outwards, then each merge into a section (27b) running parallel to the leg and are bent towards the leg (25b) in a free end section (28b), wherein each end section (28b) is formed as clamping spring disk.

11. The ultrasound flow measuring device according to one of claims 6 to 9, **characterized in that** the spring clip (21a, 21c) has a central section, which is U-shaped in the side view, the web (24a, 24c) of which acts on the ultrasound transducer (10) or on the printed circuit board section (8), on which the ultrasound transducer (10) is arranged, wherein free leg ends (26a, 26c) of the U-shaped central section are arcuately bent outwards by 180 degrees and, on the end side, have web-parallel end sections (28a, 28c), which are formed as clamping spring disks.

12. The ultrasound flow measuring device according to one of claims 6 to 9, **characterized in that** the spring clip (21) has a central section, which is U-shaped in the side view, the web (24) of which acts on the ultrasound transducer (10) or on the printed circuit board section (8), on which the ultrasound transducer (10) is arranged, wherein the legs (25) of the U-shaped central section taper obliquely inwards and the free legs ends (26) of the U-shaped central section are bent obliquely outwards and upwards, then each merge into a section (27) running parallel to the leg and are bent towards the leg (26) with a free end section (28), wherein each end section (28) is formed as clamping spring disk.

13. The ultrasound flow measuring device according to one of claims 6 to 12, **characterized in that** the spring clip (21) has recesses (31) in sections.

14. The ultrasound flow measuring device according to one of the preceding claims, **characterized in that** an ultrasound transducer (10) is arranged on a printed circuit board section (8) of a printed circuit board (5), which is arranged in an elastically movable manner with respect to the remaining printed circuit board (5), and that the ultrasound transducer (10) is connected to the printed circuit board section (8) by means of a permanently elastic electrically conductive adhesive.

15. The ultrasound flow measuring device according to one of claims 6 to 14, **characterized in that** the ultrasound transducer (10) is contacted at two opposite front sides, is electrically conductively connected to a printed circuit board (5) or a printed circuit board section (8) at a front side and to the printed circuit board (5) via the spring clip (21) with the other front side.

16. The ultrasound flow measuring device according to one of claims 3 to 15, **characterized by** one or several of the following features:
- the intermediate housing (11) receives water-absorbing means,
- the intermediate housing (11) receives an antenna,
- the housing (1) is formed in a pot-shaped manner,
- the channel (2) is integrated into the housing (1) on the bottom side,
- the housing (1) is formed as plastic injection molded part,
- the cover (14) is tightly welded to the housing (1),
- the printed circuit board (5) is provided with a display (6) on its side facing the intermediate housing (11),
- the intermediate housing (11) has a recess (12) aligned with the display (6),
- the cover (14) is formed in a transparent manner so as to be aligned with the display (6) at least in the region of the recess (12), and
- two ultrasound transducers (10) are provided on diametrically opposite sections (8) of the printed circuit board (5) and a force is applied to them by means of the spring means (15, 21).

## Revendications

1. Débitmètre à ultrasons comportant un boîtier (1), avec un canal (2) formé en un seul tenant avec le boîtier (2) pour le passage d'un fluide dont le débit doit être mesuré, comportant au moins un transducteur à ultrasons (10), qui est disposé sur une paroi délimitant le canal (2) à l'intérieur du boîtier (1), **caractérisé en ce que** le au moins un transducteur à ultrasons (10) est fixé à l'intérieur du boîtier (1) au moyen d'au moins une liaison à encliquetage et/ou à pince non détachable (16, 17).

2. Débitmètre à ultrasons selon la revendication 1, **caractérisé en ce qu'**au moins une paire de broches de serrage (17) est prévue pour chaque transducteur à ultrasons (10) à l'intérieur du boîtier (1), et **en ce que** chaque transducteur à ultrasons (10) est fixé à la paire de broches de serrage (17) au moyen de rondelles élastiques de serrage (16, 28, 28a-c).

3. Débitmètre à ultrasons selon une des revendications précédentes, **caractérisé en ce que** le boîtier (1) contient une carte de circuit imprimé (5) avec des composants électriques et électroniques (6, 7), **en ce qu'**un couvercle (14) fermant le boîtier (1) et un boîtier intermédiaire (11, 11a) disposé entre le couvercle (14) de boîtier et la carte de circuit imprimé (5) dans le boîtier (1) est prévu, lequel boîtier intermédiaire est fixé à l'intérieur du boîtier (1) au moyen d'un ressort de serrage et maintient par conjonction de forme des moyens à ressort (15, 21) pour appliquer une force sur le ou les transducteurs à ultrasons (10) et des rondelles élastiques de serrage (16, 28, 28a-c).

4. Débitmètre à ultrasons selon la revendication 3, **caractérisé en ce que** le boîtier intermédiaire (11, 11a) est façonné en plastique et les moyens à ressort (15, 21) ainsi que les rondelles élastiques de serrage (16, 28, 28a-c) sont constitués de métal et sont intégrés par conjonction de forme dans le boîtier intermédiaire (11, 11a) ou entre le boîtier (1) et le boîtier intermédiaire (11, 11a).

5. Débitmètre à ultrasons selon la revendication 3 ou 4, **caractérisé en ce que** les moyens à ressort (15) pour appliquer une force à un transducteur à ultrasons (10) sont formés par au moins un ressort hélicoïdal (15) disposé entre le boîtier.

6. Débitmètre à ultrasons selon la revendication 3 ou 4, **caractérisé en ce que** le moyen à ressort (21) pour appliquer une force à un transducteur à ultrasons (10) est conçu comme un clip à ressort (21) et les rondelles élastiques de serrage sont conçues en tant que sections d'extrémité (28, 28a-c) du clip à ressort (21) en un seul tenant.

7. Débitmètre à ultrasons selon la revendication 6, **caractérisé en ce que** le clip à ressort (21) est formé par une plaque à ressort (21).

8. Débitmètre à ultrasons selon la revendication 7, **caractérisé en ce que** la plaque à ressort (21) forme dans ses sections d'extrémité (28, 28a-c) deux rondelles élastiques de serrage pour la fixation sur une paire de broches de serrage (17) côté boîtier.

9. Débitmètre à ultrasons selon la revendication 8, **caractérisé en ce qu'**au moins une paire de languettes (20) est prévue sur le boîtier intermédiaire (11a), laquelle paire de languettes reçoit le clip à ressort (21) par conjonction de forme et est pénétrée par la paire de broches de serrage (17).

10. Débitmètre à ultrasons selon une des revendications 6 à 9, **caractérisé en ce que** le clip à ressort (21b) présente une section centrale en forme de U en vue de côté, dont l'entretoise (24b) agit sur le transducteur à ultrasons (10) ou la section de carte de circuit imprimé (8), sur laquelle est disposé le transducteur à ultrasons (10), dans lequel les extrémités libres des branches (26b) de la section centrale en forme de U sont pliées transversalement vers l'extérieur, puis fusionnent respectivement dans une section (27b) s'étendant parallèlement à la branche et sont pliées avec une section d'extrémité libre (28b) vers la branche (25b), dans lequel chaque section d'extrémité (28b) est conçue comme une rondelle élastique de serrage.

11. Débitmètre à ultrasons selon une des revendications 6 à 9, **caractérisé en ce que** le clip à ressort (21a, 21c) présente une section centrale en forme de U en vue de côté, dont l'entretoise (24a, 24c) agit sur le transducteur à ultrasons (10) ou sur la section de circuit imprimé (8), sur laquelle est disposé le transducteur à ultrasons (10), dans lequel les extrémités libres des branches (26a, 26c) de la section centrale en forme de U sont pliées vers l'extérieur en forme d'arc à 180 degrés et présentent, à l'extrémité, des sections d'extrémité (28a, 28c) parallèles à l'entretoise, qui sont conçues comme des rondelles élastiques de serrage.

12. Débitmètre à ultrasons selon une des revendications 6 à 9, **caractérisé en ce que** le clip à ressort (21) présente une section centrale en forme de U en vue de côté, dont l'entretoise (24) agit sur le transducteur à ultrasons (10) ou sur la carte de circuit imprimé (8), sur laquelle le transducteur à ultrasons (10) est disposé, dans lequel les branches (25) de la section centrale en forme de U se rétrécissent obliquement vers l'intérieur et les extrémités libres des branches (26) de la section centrale en forme de U sont pliées obliquement vers l'extérieur et vers le haut, puis fusionnent respectivement dans une section (27) parallèle à la branche et sont pliées avec une section d'extrémité libre (28) vers la branche (26), dans lequel chaque section d'extrémité (28) est conçue comme une rondelle élastique de serrage.

13. Débitmètre à ultrasons selon une des revendications 6 à 12, **caractérisé en ce que** le clip à ressort (21) présente des évidements (31) dans des sections.

14. Débitmètre à ultrasons selon une des revendications précédentes, **caractérisé en ce qu'**un transducteur à ultrasons (10) disposé sur une section de circuit imprimé (8) d'une carte de circuit imprimé (5), qui est agencé pour être élastiquement mobile par rapport à la carte de circuit imprimé restante (5), et que le transducteur à ultrasons (10) est connecté à la section de carte de circuit imprimé (8) au moyen d'un adhésif électriquement conducteur et élastique en permanence.

15. Débitmètre à ultrasons selon une des revendications 6 à 14, **caractérisé en ce que** le transducteur à ultrasons (10) est en contact sur deux faces d'extrémité opposées, sur une face d'extrémité avec une carte de circuit imprimé (5) ou une section de carte de circuit imprimé (8) et avec l'autre face d'extrémité via le clip à ressort (21) est connecté de manière électriquement conductrice à la carte de circuit imprimé (5).

16. Débitmètre à ultrasons selon une des revendications 3 à 15, **caractérisé par** une ou plusieurs des caractéristiques suivantes:
- le boîtier intermédiaire (11) contient des agents absorbant l'eau,
- le boîtier intermédiaire (11) renferme une antenne,
- le boîtier (1) est en forme de pot,
- le canal (2) est intégré dans le fond du boîtier (1),
- le boîtier (1) est conçu comme une pièce moulée par injection de plastique,
- le couvercle (14) est solidement soudé au boîtier (1),
- la carte de circuit imprimé (5) est pourvue sur le côté tourné vers le boîtier intermédiaire (11) d'un écran (6),
- le boîtier intermédiaire (11) présente un évidement (12) aligné avec l'écran (6),
- le couvercle (14) est transparent au moins dans la zone de l'évidement (12) aligné avec l'écran (6) et
- deux transducteurs à ultrasons (10) sont prévus sur des sections diamétralement opposées (8) de la carte de circuit imprimé (5) et sont sollicités par une force par les moyens à ressort (15, 21).
